# EUROPEAN PATENT APPLICATION

(11) **EP 4 201 655 A1**
(43) Date of publication of application: **28.06.2023**
(21) Application number: 22215197.9
(22) Date of filing: 20.12.2022
(51) Int. Cl.: B29C 70/44, B29C 70/54, B29B 11/16, B29C 43/00, B29C 43/02, B29C 51/10, B29D 99/00, C08J 5/18, B29K 71/00, B29C 43/14, B29K 101/12, B29L 31/30

(54) **NON-POLYIMID BASED THERMOPLASTIC FILM AS VACUUM BAG MATERIAL FOR CONSOLIDATION OF THERMOPLASTIC COMPOSITE MATERIALS SYSTEMS AND METHODS**

(30) Priority: 21.12.2021 US 202117558010
(71) Applicant: Rohr, Inc., Chula Vista, CA 91910-2098 (US)
(72) Inventor: VAN TOOREN, Michael, San Diego, 92122 (US); BAHRAMSHAHI, Noushin, Mission Viejo, 92692 (US)
(74) Representative: Dehns

(57) **Abstract**

A method for consolidating (340) a thermoplastic component includes positioning (320) a thermoplastic vacuum bagging film (e.g., PAEK or PEEK) over a thermoplastic preform (e.g., PPS or LM PAEK) to be consolidated, vacuum consolidating the thermoplastic component with the thermoplastic vacuum bagging film to form the thermoplastic component, and removing (350) the thermoplastic vacuum bagging film from the consolidated thermoplastic component.

## Description

### FIELD

The present disclosure (invention) relates generally to thermoplastic composite materials, and more specifically to systems and methods for consolidating thermoplastic composite panels using removable vacuum bagging material.

### BACKGROUND

Consolidating large thermoplastic fiber-reinforced composite components includes increasing the temperature of the component selectively and applying consolidating pressures. A common method of applying consolidating pressures is by sealing the thermoplastic composite component with a film and applying vacuum to pull the film against the thermoplastic composite component. Polyimid films (e.g., Kaptan^{®}HN from DuPont and Upilex^{®} from UBE) are typically used as bagging material for autoclave or oven-based consolidation of high temperature thermoplastic components. The bagging film is typically draped over the thermoplastic composite component and must conform to the geometry of the thermoplastic composite component as vacuum is applied in order to evenly apply pressure to the component.

### SUMMARY

A method for consolidating a thermoplastic component according to an aspect of the present invention is disclosed, comprising positioning a Polyaryletherketone film over a thermoplastic preform to be consolidated, applying a heat to the thermoplastic preform, applying a pressure via the Polyaryletherketone film for consolidating the thermoplastic preform into a thermoplastic component, and removing the Polyaryletherketone film from the consolidated thermoplastic component.

Optionally, the method further comprises cooling the thermoplastic component before removing the Polyaryletherketone film.

Optionally, the method further comprises sealing the Polyaryletherketone film to a forming tool before applying the pressure.

Optionally, the thermoplastic preform comprises a Polyphenylene sulfide material.

Optionally, applying the heat to the thermoplastic preform comprises heating the thermoplastic preform to a consolidation temperature which is less than a melting point temperature of the Polyaryletherketone film.

Optionally, the consolidation temperature is greater than a melting point temperature of the thermoplastic preform.

Optionally, the consolidation temperature is between 260°C (500 °F) and 330°C (626 °F).

Optionally, the consolidation temperature is between 280°C (536 °F) and 310°C (590 °F).

Optionally, the consolidation temperature is between 280°C (536 °F) and 300°C (572 °F).

A method for manufacturing a preform of a component made of a thermoplastic material according to an aspect of the present invention is disclosed. This method comprising the following steps: a) depositing a sheet of the thermoplastic material constituting the preform on a forming tool, a form of the forming tool conforming to an outer form or geometry of the preform; b) depositing a thermoplastic vacuum bagging film over the preform; c) sealing a perimeter of the thermoplastic vacuum bagging film to the forming tool; d) consolidating the sheet of the thermoplastic material constituting the preform on the forming tool with the thermoplastic vacuum bagging film; e) separating the preform, which is located on the forming tool, from the thermoplastic vacuum bagging film; and f) removing the forming tool to obtain the preform.

Optionally, the thermoplastic material comprises a Polyphenylene sulfide material.

Optionally, the consolidating of step d) comprises heating the thermoplastic material to a consolidation temperature which is less than a melting point temperature of the thermoplastic vacuum bagging film.

Optionally, the consolidation temperature is greater than a melting point temperature of the thermoplastic material.

Optionally, the consolidation temperature is between 260°C (500 °F) and 330°C (626 °F).

Optionally, the consolidation temperature is between 280°C (536 °F) and 310°C (590 °F).

Optionally, the consolidation temperature is between 280°C (536 °F) and 300°C (572 °F).

Optionally, the thermoplastic vacuum bagging film comprises a Polyaryletherketone film.

Optionally, the thermoplastic vacuum bagging film comprises a Polyetheretherketone film.

Optionally, the component is a self-stiffened panel comprising a base skin, on one face of which, stiffeners are added and arranged side-by-side, of which base parts of the stiffeners are pressed against said skin.

According to an aspect of the present invention, there is disclosed a thermoplastic component comprising a base skin and a plurality of stiffeners coupled to the base skin. The thermoplastic component is manufactured using the method for consolidating a thermoplastic component. 20.

A method for manufacturing a preform of a component made of a thermoplastic material according to an aspect of the present invention is disclosed. The method comprises the following steps: a) depositing a sheet of the thermoplastic film on a first forming tool; b) sealing a perimeter of the thermoplastic film to the first forming tool; c) heating the thermoplastic film to a pliable forming temperature; d) evacuating air from between the thermoplastic film and the first forming tool; e) conforming the thermoplastic film to a tool mold surface of the first forming tool to form a vacuum formed thermoplastic vacuum bagging film from the thermoplastic film; f) depositing a sheet of the thermoplastic material constituting the preform on a second forming tool, a form of the second forming tool conforming to an outer form or geometry of the preform; g) depositing the vacuum formed thermoplastic vacuum bagging film over the preform, wherein the vacuum formed thermoplastic vacuum bagging film conforms to the sheet of the thermoplastic material; h) sealing a perimeter of the vacuum formed thermoplastic vacuum bagging film to the second forming tool; i) consolidating the sheet of the thermoplastic material constituting the preform on the second forming tool with the vacuum formed thermoplastic vacuum bagging film; j) separating the preform, which is located on the second forming tool, from the vacuum formed thermoplastic vacuum bagging film; and k) removing the second forming tool to obtain the preform.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A, FIG. 1B, and FIG. 1C illustrate a vacuum consolidation process for a thermoplastic preform utilizing a thermoplastic vacuum bagging film, in accordance with various embodiments;
FIG. 2 illustrates a flow chart for a method for consolidating a thermoplastic component, in accordance with various embodiments;
FIG. 3 illustrates a flow chart for a method for manufacturing a preform of a component made of thermoplastic material, in accordance with various embodiments;
FIG. 4 illustrates an isometric view of an exemplary consolidated thermoplastic component manufactured utilizing the vacuum consolidation processes disclosed herein, in accordance with various embodiments; and
FIG. 5A, FIG. 5B, and FIG. 5C illustrate a vacuum forming process for a thermoplastic film to create a vacuum formed thermoplastic vacuum bagging film, in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not for limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

Conventional thermoplastic consolidation methods include the use of polyimid films as bagging material to apply consolidating pressures to the thermoplastic component. These polyimid based materials tend to be expensive and difficult to work with due to their stiffness and low fracture toughness. The bags tend to be hard to drape over the parts and also tend to rip easily. Moreover, polyimid vacuum bags tend to be used once and then discarded.

Thermoplastic consolidation systems and methods of the present disclosure are performed using vacuum bagging films made from a high temperature Polyaryletherketone (PAEK) material, such as Polyetheretherketone (PEEK) for example, for consolidating a thermoplastic part made from a material having a lower melting point temperature than that of the vacuum bagging film, such as Polyphenylene sulfide (PPS) or a Low Melt PAEK (LM PAEK). PAEK vacuum bagging films of the present disclosure provide increased drapability and are more tear-resistant than conventional polyimid films. PAEK vacuum bagging films of the present disclosure may be removed after the consolidation process and reused multiple times.

PEEK thermoplastic vacuum bagging films of the present disclosure may comprise a propagation tear resistance, determined according to standard ASTM D1922-15(2020), of at least 3.2N.

PAEK thermoplastic vacuum bagging films of the present disclosure may comprise a minimum Tensile Elongation (at break), determined according to standard ASTM D882, of 130%. PEEK thermoplastic vacuum bagging films of the present disclosure may comprise a minimum Tensile Elongation (at break), determined according to standard ASTM D882, of 150% or more. In contrast, polyimide films generally comprise a Tensile Elongation (at break), determined according to standard ASTM D882, of between 40% and 70%.

PAEK thermoplastic vacuum bagging films of the present disclosure may comprise a glass transition temperature (Tg) and melting point temperature (Tm), determined according to standard ASTM D3418, of approximately 150°C (302 °F) and approximately 340 °C (644 °F), respectively. PEEK thermoplastic vacuum bagging films of the present disclosure may comprise a glass transition temperature and melting point temperature, determined according to standard ASTM D3418, of approximately 143°C (289.4 °F) and approximately 340 °C (644 °F), respectively. PPS thermoplastic preforms of the present disclosure may comprise a glass transition temperature and melting point temperature, determined according to standard ASTM D3418, of approximately 90°C (194 °F) and approximately 280 °C (536 °F), respectively.

Thermoplastic parts made using the thermoplastic consolidation process described herein may be used with aircraft fuselage, wings, stabilizers, or elevators, among other aerodynamic surfaces of an aircraft including aircraft engine nacelles. Some examples of common names for these parts known to those practiced in the arts include but are not limited to fan cowl doors, passenger doors, fuselage skin panels, etc.

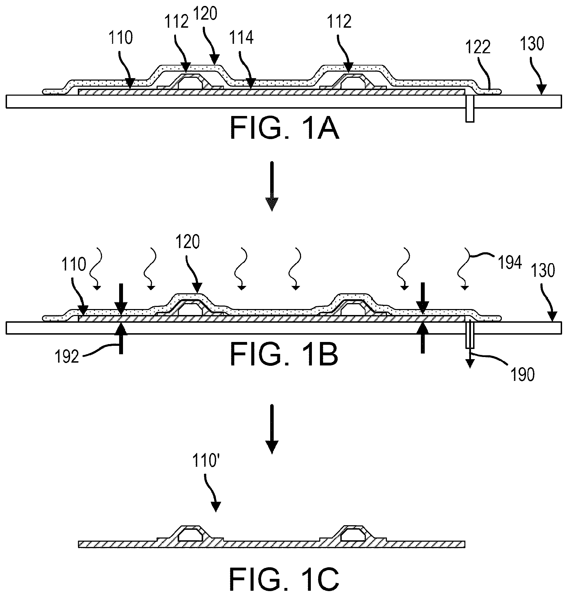

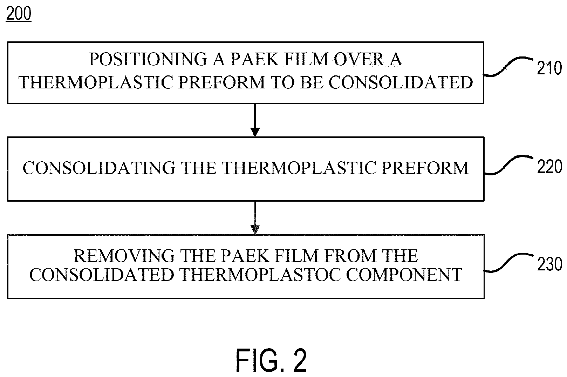

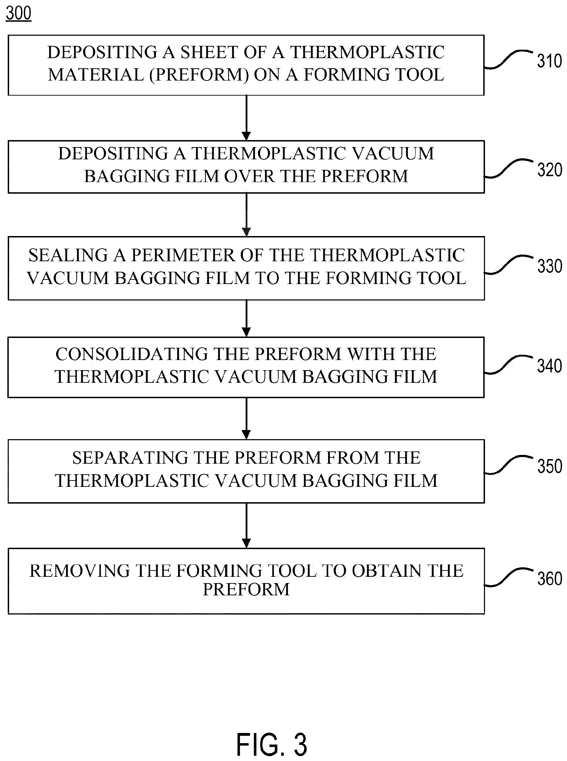

With combined reference to FIG. 1A through FIG. 1C, a method for manufacturing a preform 110 of a component made of thermoplastic material using a thermoplastic vacuum bagging film 120 is illustrated, in accordance with various embodiments. Method 200 for consolidating a thermoplastic component provided in FIG. 2 and method 300 for manufacturing a preform of a component made of thermoplastic material provided in FIG. 3 are discussed with reference to FIG. 1A through FIG. 1C. Preform 110 may be manufactured utilizing a thermoplastic consolidation process. Preform 110 may be positioned or deposited on a forming surface of a forming tool 130 (step 210; step 310). The shape of the forming surface of forming tool 130 is configured to produce the desired component surface shape. The forming surface may be planar or may comprise a three dimensional complex geometry. For example, the forming surface may be convex, concave, or any other desirable geometry. The outer form or geometry of preform 110 may conform to the form or geometry of the forming tool 130. Preform 110 may comprise one or more sheets of a thermoplastic material, such as Polyphenylene sulfide (PPS) or a Low Melt PAEK (LM PAEK). Preform 110 may comprise a fiber reinforced thermoplastic, though in various embodiments the preform 110 is devoid of fibers. Preform 110 may further comprise one or more stiffeners 112, such as hollow hat stiffeners, U-shaped stiffeners, L-shaped stiffeners, or the like. Stiffeners 112 may be added and arranged side-by-side. Base parts of the stiffeners 112 may be pressed against the base skin 114 of preform 110. In this manner, preform 110 may be consolidated into a self-stiffened panel comprising a base skin 114 and one or more stiffeners 112.

The thermoplastic vacuum bagging film 120 may be positioned or deposited over the preform 110 (step 320). Thermoplastic film 120 may comprise a thermoplastic material having a higher melting point temperature than the preform 110 material. In various embodiments, thermoplastic film 120 comprises a high temperature Polyaryletherketone (PAEK) material, such as Polyetheretherketone (PEEK).

Thermoplastic film 120 may comprise a thickness of between 25 microns and 100 microns (between 0.0009842 and 0.0039370 inches) in various embodiments, between 35 microns and 85 microns (between 0.0001378 and 0.0033464 inches) in various embodiments, between 40 microns and 75 microns (between 0.0015748 and 0.0029527 inches) in various embodiments, and about 50 microns (about 0.0019685 inches) in various embodiments, wherein the term "about" as used in this context can only mean ± 10 microns (± 0.0003937 microns). Thermoplastic film 120 may comprise a uniform thickness, though in various embodiments the thermoplastic film 120 is not uniform in thickness.

A perimeter 122 of the thermoplastic film 120 may then be sealed to the forming tool 130 (step 330). For example, thermoplastic film 120 may be sealed to forming tool 130 using an adhesive tape. In this manner, the forming tool 130 and the thermoplastic film 120 may form a plenum in which preform 110 is located. With the preform 110 sealed between thermoplastic film 120 and forming tool 130, the preform 110 may be consolidated using vacuum consolidation (step 220; step 340). During the vacuum consolidation, air, represented by arrow 190, can be evacuated from between thermoplastic film 120 and forming tool 530 to apply a vacuum. By removing air from the plenum, pressure, illustrated by arrows 192, may be applied with thermoplastic film 120, thereby pulling preform 110 against forming tool 130. Stated differently, preform 110 may be compressed between forming tool 130 and thermoplastic film 120. As vacuum is applied, thermoplastic film 120 may be pulled closely against preform 110 such that it is desirable for thermoplastic film 120 to conform to the geometry of preform 110 without tearing. In this regard, it is desirable for thermoplastic film 120 to have good tear resistance while also having good drapability (i.e., able to flex and conform closely to preform 110).

Moreover, heat, represented by arrows 194, may also be applied to preform 110 during the vacuum consolidation process. Heat 194 may be applied using a heater such as an autoclave, oven, infrared heater, or any other suitable heater. Heat 194 may be applied to bring the preform 110 to a consolidation temperature which is less than the melting point temperature of the thermoplastic film 120 such that the thermoplastic film 120 does not melt. The consolidation temperature is greater than the melting point temperature of thermoplastic preform 110 such that the thermoplastic preform consolidates into the desired thermoplastic component. Prior to heating, preform 110 may be rigid or generally non-pliable. While being heated to the consolidation temperature, preform 110 may become pliable for forming purposes. The consolidation temperature may depend on the particular materials being used for the preform 110 and thermoplastic film 120. The consolidation temperature may be between 260°C (500 °F) and 330°C (626 °F) in various embodiments, between 280°C (536 °F) and 310°C (590 °F) in various embodiments, between 280°C (536 °F) and 300°C (572 °F) in various embodiments, and between 260°C (500 °F) and 300°C (572 °F) in various embodiments. As used herein, the term "consolidation temperature" may refer to a range of temperatures, wherein preform 110 is suitable for consolidation (usually at or above the glass transition temperature).

After being heated to the consolidation temperature for a predetermined duration, heat 194 may then be removed from the preform 110. Heat 194 may be removed from the preform 110 by turning off the heating element(s). Stated differently, the preform 110 may be allowed to cool to a suitable temperature (e.g., room temperature). Pressure 102 may be also be removed from the preform 110. Pressure 102 may be removed from the preform 110 by turning off the vacuum pump device (e.g., a vacuum pump). Because the consolidation temperature is less than the melting point temperature of thermoplastic film 120, thermoplastic film 120 is not consolidated and is removed from the consolidated preform 110 (step 230; step 350), now a consolidated thermoplastic component 110'. Moreover, the forming tool 130 may be removed from the consolidated thermoplastic component 110' (step 360).

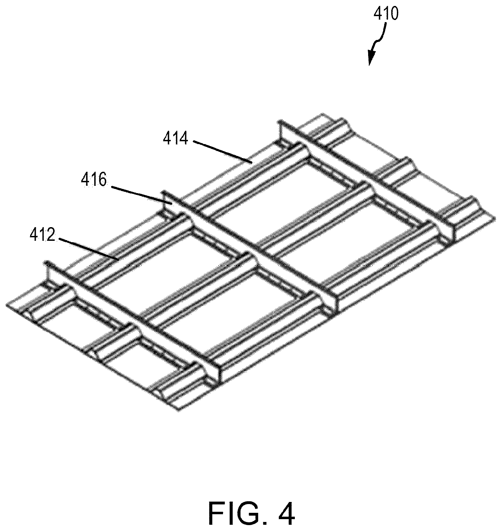

With reference to FIG. 4, an exemplary consolidated thermoplastic component 410 is illustrated manufactured utilizing the vacuum consolidation processes disclosed herein, in accordance with various embodiments. Consolidated thermoplastic component 410 includes a base skin 414 and a plurality of stiffeners 412 (also referred to as stringers) arranged in a side-by-side configuration. Moreover, a plurality of rib stiffeners 416 may be arranged in a side-by-side configuration. The plurality of rib stiffeners 416 may be oriented at an angle (e.g., perpendicular) to the stiffeners 412. The plurality of rib stiffeners 416 intersect the stiffeners 412. In this regard, it can be appreciated that the surface onto which the vacuum bagging film is pressed against during a vacuum consolidation process may comprise a complex geometry which may tend to apply various stretching and tensile forces on the vacuum bagging film.

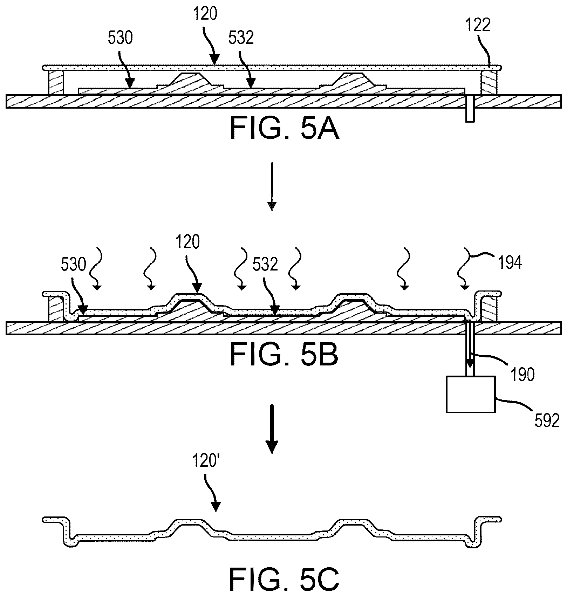

With reference now to FIG. 5A through FIG. 5C, a vacuum forming process for the thermoplastic film 120 is illustrated, in accordance with various embodiments. Thermoplastic film 120 can be, though in various embodiments is not, vacuum formed prior to the thermoplastic consolidation process of preform 110 (i.e., prior to using thermoplastic film 120 as a vacuum bag for consolidation of the thermoplastic component). Thermoplastic film 120 may generally comprise a planar sheet of material prior to being vacuum formed. Thermoplastic film 120 may be vacuum formed over a forming tool 530 comprising a geometry similar to the parts to be consolidated to make a tight fitting bag that in various embodiments does not require pleats. Forming tool 530 may be a tool that mimics the geometry of the actual parts to be consolidated, or may be actual parts themselves, so long as the forming tool comprises the same or similar geometry as the parts to be consolidated. In this regard, thermoplastic film 120 may be placed on forming tool 530 (see FIG. 5A) with thermoplastic film 120 spaced apart from tool mold surface 532. Thermoplastic film 120 may be coupled to forming tool 530 around the periphery 122 such that the thermoplastic film 120 is initially (e.g., prior to heating) spaced apart from tool mold surface 532. With reference to FIG. 5B, heat 194 may then be applied to thermoplastic film 120. In response to heating, thermoplastic film 120 becomes pliable and begins to translate toward tool mold surface 532.

With continued reference to FIG. 5B, the pressure created by vacuum 592 causes thermoplastic film 120, which is at a pliable forming temperature, to conform to tool mold surface 532. In other words, thermoplastic film 120 is forced into contact with tool mold surface 532. FIG. 5B shows thermoplastic film 120 being formed on tool mold surface 532. Heat 194 may be removed (e.g., the heater powered off) in response to thermoplastic film 120 conforming to tool mold surface 532. In various embodiments, vacuum 592 may be turned off in response to thermoplastic film 120 conforming to tool mold surface 532. In various embodiments, with reference now to FIG. 5C, this vacuum formed thermoplastic vacuum bagging film 120' can then be removed from forming tool 530 and used as the vacuum bag for consolidation of thermoplastic preform 110 (see FIG. 1A through FIG. 1C).

In various embodiments, the pliable forming temperature for the thermoplastic film 120 is greater than or equal to a glass transition temperature of thermoplastic film 120 and less than a melting point of the thermoplastic film 120. For example, a thermoplastic film having a melting point of 649° F (343° C) and a glass transition temperature of 249° F (143° C) may be heated to a pliable forming temperature of between 249° F (143° C) and 649° F (343° C). As will be appreciated by those skilled in the art, the suitable pliable forming temperature may vary depending on the particular type of thermoplastic material being used, as well as other factors, such as the thickness of thermoplastic film 120. As used herein, the term "pliable forming temperature" may refer to a range of temperatures, wherein thermoplastic film 120 is suitable for forming (usually at or above the glass transition temperature).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for consolidating a thermoplastic component (20, 110'), comprising:
positioning a Polyaryletherketone film over a thermoplastic preform (110) to be consolidated;
applying a heat (194) to the thermoplastic preform (110);
applying a pressure (102) via the Polyaryletherketone film for consolidating the thermoplastic preform (110) into a thermoplastic component; and
removing the Polyaryletherketone film from the consolidated thermoplastic component (110'; 410).

2. The method of claim 1, further comprising cooling the thermoplastic component before removing the Polyaryletherketone film.

3. The method of claims 1 or 2, further comprising sealing the Polyaryletherketone film to a forming tool (130; 530) before applying the pressure (102).

4. The method of any preceding claim, wherein the thermoplastic preform (110) comprises a Polyphenylene sulfide material.

5. The method of any preceding claim, wherein applying the heat (194) to the thermoplastic preform (110) comprises heating the thermoplastic preform (110) to a consolidation temperature which is less than a melting point temperature of the Polyaryletherketone film.

6. The method of claim 5, wherein the consolidation temperature is greater than a melting point temperature of the thermoplastic preform (110).

7. A method for manufacturing a preform (110) of a component made of a thermoplastic material, the method comprising the following steps:
a) depositing (310) a sheet of the thermoplastic material constituting the preform (110) on a forming tool (130; 530), a form of the forming tool (130; 530) conforming to an outer form or geometry of the preform (110);
b) depositing (320) a thermoplastic vacuum bagging film (120) over the preform (110);
c) sealing (330) a perimeter (122) of the thermoplastic vacuum bagging film (120) to the forming tool (130; 530);
d) consolidating (340) the sheet of the thermoplastic material constituting the preform (110) on the forming tool (130; 530) with the thermoplastic vacuum bagging film (120);
e) separating (350) the preform (110), which is located on the forming tool (130; 530), from the thermoplastic vacuum bagging film (120); and
f) removing (360) the forming tool (130; 530) to obtain the preform (110).

8. The method of claim 7, wherein the thermoplastic material comprises a Polyphenylene sulfide material.

9. The method of claims 7 or 8, wherein the consolidating of step (220; 340) d) comprises heating the thermoplastic material to a consolidation temperature which is less than a melting point temperature of the thermoplastic vacuum bagging film (120).

10. The method of claim 9, wherein the consolidation temperature is greater than a melting point temperature of the thermoplastic material.

11. The method of any of claims 5, 6, 9 or 10, wherein the consolidation temperature is between 260°C (500 °F) and 330°C (626 °F).

12. The method of any of claims 5, 6, 9, 10 or 11, wherein the consolidation temperature is between 280°C (536 °F) and 310°C (590 °F), for example between 280°C (536 °F) and 300°C (572 °F).

13. The method of any of claims 7 to 12 , wherein the thermoplastic vacuum bagging film (120) comprises a Polyaryletherketone film wherein the thermoplastic vacuum bagging film (120) optionally comprises a Polyetheretherketone film.

14. The method of claim 7 to 13, wherein the component is a self-stiffened panel comprising a base skin, on one face of which, stiffeners are added and arranged side-by-side, of which base parts of the stiffeners are pressed against said skin.

15. A method for manufacturing a preform (110) of a component made of a thermoplastic material, the method comprising the following steps:
a) depositing a sheet of the thermoplastic film (120) on a first forming tool (130; 530);
b) sealing a perimeter (122) of the thermoplastic film (120) to the first forming tool (130; 530);
c) heating the thermoplastic film (120) to a pliable forming temperature;
d) evacuating air from between the thermoplastic film (120) and the first forming tool (130; 530);
e) conforming the thermoplastic film (120) to a tool mold surface (532) of the first forming tool (130; 530) to form a vacuum formed thermoplastic vacuum bagging film (120) from the thermoplastic film (120);
f) depositing a sheet of the thermoplastic material constituting the preform (110) on a second forming tool (130; 530), a form of the second forming tool (130; 530) conforming to an outer form or geometry of the preform (110);
g) depositing the vacuum formed thermoplastic vacuum bagging film (120) over the preform (110), wherein the vacuum formed thermoplastic vacuum bagging film (120) conforms to the sheet of the thermoplastic material;
h) sealing a perimeter (122) of the vacuum formed thermoplastic vacuum bagging film (120) to the second forming tool (130; 530);
i) consolidating the sheet of the thermoplastic material constituting the preform (110) on the second forming tool (130; 530) with the vacuum formed thermoplastic vacuum bagging film (120);
j) separating the preform (110), which is located on the second forming tool (130; 530), from the vacuum formed thermoplastic vacuum bagging film (120); and
k) removing the second forming tool (130; 530) to obtain the preform (110).
